# EUROPEAN PATENT SPECIFICATION

(11) **EP 0 962 363 B1**
(45) Date of publication and mention of the grant of the patent: **23.07.2003**
(21) Application number: 99304115.1
(22) Date of filing: 27.05.1999
(51) Int. Cl.: B60R 21/16

(54) **Airbag**
Luftsack
Coussin gonflable

(30) Priority: 01.06.1998 JP 15139798; 23.04.1999 JP 11681799
(43) Date of publication of application: 08.12.1999
(73) Proprietor: TAKATA CORPORATION, Minato-ku, Tokyo (JP)
(72) Inventor: Mishina, Jyoji, c/o Takata Corporation, Tokyo (JP); Masuda, Yasushi, c/o Takata Corporation, Tokyo (JP); Nakanishi, Ryosuke, c/o Takata Corporation, Tokyo (JP)
(74) Representative: Jenkins, Peter David

(56) References cited:
- WO-A-95/00366
- WO-A-98/12075
- GB-A- 1 340 549
- GB-A- 2 301 320
- US-A- 3 879 056
- US-A- 5 511 821
- PATENT ABSTRACTS OF JAPAN vol. 014, no. 556 (M-1057), 11 December 1990 (1990-12-11) & JP 02 237837 A (TAKATA KK), 20 September 1990 (1990-09-20)
- PATENT ABSTRACTS OF JAPAN vol. 1998, no. 809, 31 July 1998 (1998-07-31) & JP 10 086776 A (TOAGOSEI CO LTD), 7 April 1998 (1998-04-07)
- DATABASE WPI Week 9408 Derwent Publications Ltd., London, GB; AN 1994-061839 XP002117382 & JP 06 016099 A (TOSHIBA SILICONE KK), 25 January 1994 (1994-01-25)

## Description

The present invention relates to an airbag for an airbag device installed in a conveyance including a vehicle and an aircraft and, more particularly, to an airbag where gas is prevented from leaking from seams between panels.

An vehicle airbag for an automobile, such as a driver's airbag, a front passenger's airbag, a rear passenger's airbag, and a side airbag, or an airbag for an aircraft, has a plurality of panels which are sewn together in a bag-like configuration. The airbag is inflated by gas supplied from an inflator.

As for an airbag, which is difficult to retain its internal pressure, for example a side airbag (of a curtain type) for protecting a head of an occupant and-a side airbag for coping with roll over, it is desired to extremely prevent gas leakage through seams.

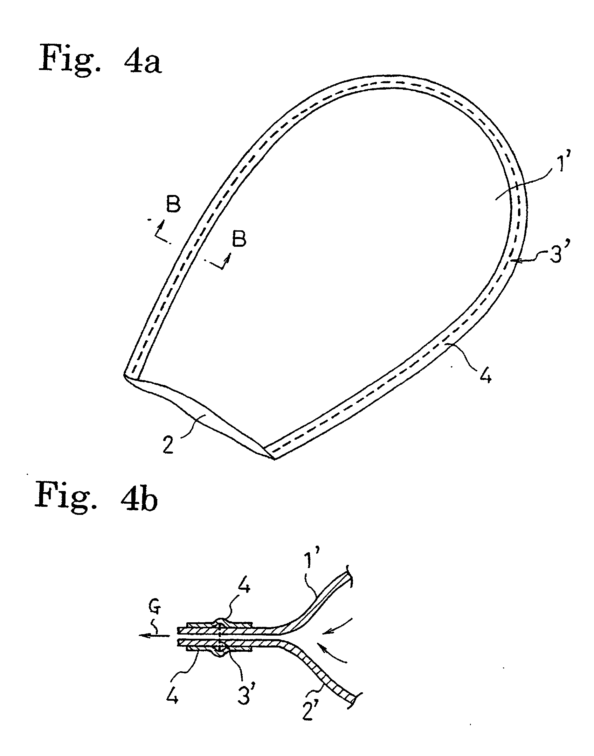

In order to prevent gas leakage through seams between panels, as shown in Figs. 4a, 4b, silicone tapes 4 are attached along peripheries of panels 1', 2' to cover a seam 3' of the panels 1', 2'.

The conventional airbag in Figs. 4a, 4b, the silicone tapes 4 must be attached to the both surfaces of the airbag, thereby increasing the man-hour and impairing the productivity. When high pressure gas is introduced into the airbag, there is a possibility of gas leakage through a clearance between the panels 1',2' as shown in an arrow G in Fig. 4b. Therefore, the amount of gas to be supplied by the inflator must be increased in consideration of the amount of gas leakage, so the capacity of the inflator should be large.

JP-A-02237837 on which the pre-characterized part of claim 1 is based, discloses an air bag having a seamed part which is reinforced by two silicone rubber coating films and a seaming thread.

US-A-5511821 discloses an inflatable air bag cushion comprising a sacrificial stitched seam.

US 3879056 disclose a gas bag comprising a restraining member having at last one breaking part which is broken when a predetermined tensile force is applied to the restraining member.

GB-A-2301320 discloses a double elastic webbing air bag comprising double weave fabrics joined together around the periphery of a hollow portion with a contact joining single weave belt for forming a bag body.

WO98/12075 discloses an adhesively bonded inflatable restraint and a method of making such a restraint. An adhesive tape is used to bond structural seams in the inflatable restraint. The aim of the present invention is to provide an airbag where gas is prevented from leaking at seams between panels and which has excellent productivity.

According to the present invention there is provided an airbag comprising a first panel and a second panel peripheral portions of which are connected to each other by connecting means, wherein said connecting means includes sewing by yarn and wherein said connecting means further includes bonding by silicone adhesive, the silicone adhesive being applied to the peripheral portions of the panels to form a seam of silicone adhesive between the panels, said seam of silicone adhesive being stretchable between said first panel and said second panel thereby preventing gas leakage between said panels, and wherein said silicone adhesive is stretchable by 200% or more, and wherein the seam of silicone adhesive to be applied is from 0.01g/cm² to 0.05g/cm².

The airbag of the present invention has little or no gas leakage, since the first panel and the second panel are not only sewn together but also bonded by the silicone adhesive along their peripheries. When the panels are sewn together after bonding the panels with the silicone adhesive, the panels are prevented from slipping to each other during the sewing operation, thus improving the sewing workability.

The seams may include a first seam positioned outside and a second seam positioned inside, and sewing yarn for the second seam may be thinner than sewing yarn for the first seam. The sewing yarn for the second seam positioned inside is broken during the inflation of the airbag so as to partially absorb energy of gas pressure. This energy absorption reduces the impact applied to the sewing yarn for the first seam positioned outside during the inflation of the airbag.

The seam of the panels may be covered by silicone sealant, thereby preventing the gas leakage at the stitches.

Embodiments of the present invention will now be described by way of example only, with reference to the accompanying drawings, in which:-
Fig. 1a is a perspective view showing an embodiment of an airbag according to the present invention, Fig. 1b is an enlarged sectional view taken along a line IB-IB of Fig. 1a, Fig. 1c is an enlarged sectional view of a part of the peripheries of the airbag when inflated;
Fig. 2 is an enlarged sectional view of the part of the peripheries of the airbag when fully inflated;
Fig. 3 is a sectional view of a part of the peripheries of an airbag according to another embodiment;
Fig. 4a is a perspective view showing a conventional airbag, Fig. 4b is an enlarged view of a section taken along a line IVB-IVB of Fig. 4a;
Fig. 5 is a side view of an airbag according to another embodiment;
Fig. 6 is a perspective view of the airbag shown in Fig. 5 when inflated; and
Fig. 7 is a sectional view taken along a line VIIA-VIIA of Fig. 6, Fig. 7b is an enlarged view of a VIIB part of Fig. 7a.

Hereinafter, embodiments of the present invention will be described with reference to the attached drawings.

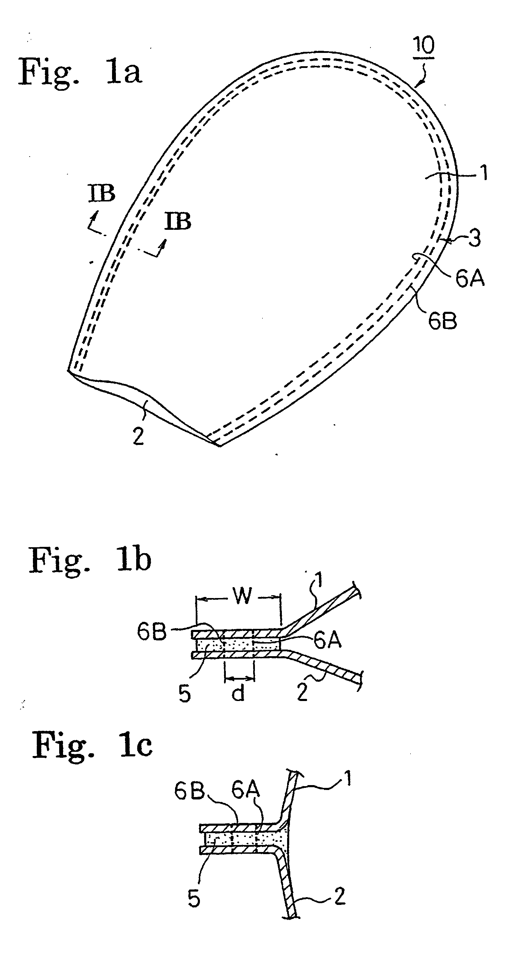

Fig. 1a is a perspective view showing an embodiment of an airbag according to the present invention, Fig. 1b is an enlarged sectional view taken along a line IB-IB of Fig. 1a, Fig. 1c is a sectional view of the same part shown in Fig. 1b when the airbag is inflated and deployed.

Though an airbag 10 shown in Figs. 1a-1c is a side airbag for an automobile, it should be understood that the present invention is not limited thereto and may be applied to automobile airbags for a driver's seat, a front passenger's seat, and a rear passenger's seat and also to an airbag for an aircraft.

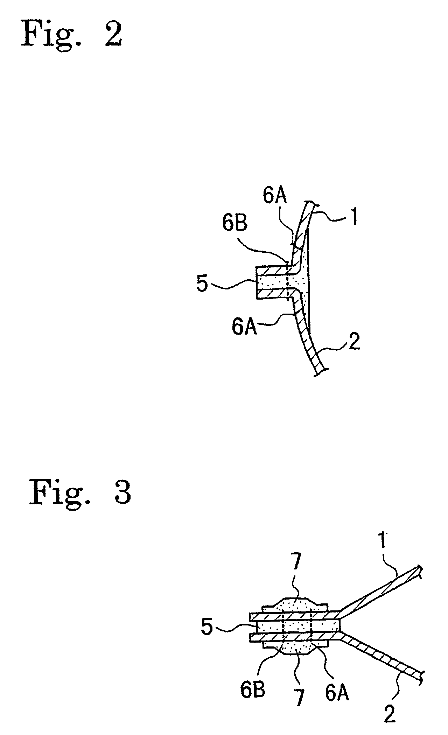

The airbag 10 has a first panel 1 and a second panel 2 which are sewn together along peripheries thereof. The peripheries of the first and second panels 1, 2 are bonded by silicone adhesive 5 and sewn together by sewing yarns 6A, 6B. During the inflation of the airbag 10, as shown in Fig. 1c and Fig. 2, the silicone adhesive 5 stretches following the panels 1, 2 which move apart from each other. The adhesive 5 stretches with being adhered to the panels 1, 2, thereby preventing the gas leakage through a clearance between the panels 1, 2.

The silicone adhesive 5 bonding the panels 1, 2 to each other has elongation of 200% or more. As the silicone adhesive, a RTV (room temperature vulcanizing) silicone rubber is particularly preferable.

The silicone adhesive 5 is applied along the peripheries of the panels 1, 2 over a width W from 5 mm to 15 mm (as shown in Fig. 1b) with an amount from 0.01g/cm² to 0.05g/cm².

The panels 1, 2 are made of woven fabric of synthetic resin. The inner surfaces of the panels 1, 2 may be coated with a silicone resin or rubber for filling.

In this embodiment, the panels 1, 2 are sewn together along two stitching lines by two sewing yarns 6A, 6B. The inner one of the stitching lines is made with the sewing yarn 6A which is relatively thin to make a second seam and the outer one is made with the sewing yarn 6B which is relatively thick to make a first seam.
According to the airbag which is sewn along the two stitching lines of the peripheries, as shown in Fig. 2, the relatively thin sewing yarn 6A composing the inner stitching line is broken by the pressure of gas supplied from an inflator, thereby partially absorbing the energy of the gas pressure which is exerted on a connection of the panels 1, 2 in the stripping direction. Therefore, the impact exerted in such a direction as to break the first seam composed of the sewing yarn 6B can be reduced, thereby further securely preventing the gas leakage at the connection of the panels 1, 2.

The relatively thin sewing yarn 6A composing the inner stitching line preferably has fineness about 210-420d (deniers) and the relatively thick sewing yarn 6B composing the outer stitching line preferably has finesses about 840-1260d. The first seam by the sewing yarn 6B is preferably located apart from the peripheral edges of the panels 1, 2 by a distance about 10-18 mm and the distance (d in Fig. 1b) between the yarn 6B and the yarn 6Ais preferably about 2-5 mm.

The airbag 10 can be made by superposing the panels 1, 2 having a portion to be sewn to which the silicone adhesive 5 is applied and, after that, sewing up them with the sewing yarns 6A, 6B. Since the panels 1, 2 are bonded to each other by the silicone adhesive 5, the panels 1, 2 are prevented from slipping to each other during the sewing, thereby improving the sewing workability.

Though the two sewing yarns are used to stitch the double seams in the airbag shown in Figs. 1a, 1b, 1c, the sewing may be made by using only one sewing yarn. In this case, a sewing yarn having fineness about 840-1260d is preferably used and a portion along and apart from the peripheral edges of the panels by a distance 10-20 mm is preferably stitched.

As shown in Fig. 3, silicone sealant 7 may be applied to the peripheral edges of the panels 1, 2 to cover the stitching lines of the sewing yarns 6A, 6B. Applying the sealant 7 prevents the gas leakage from the stitching.

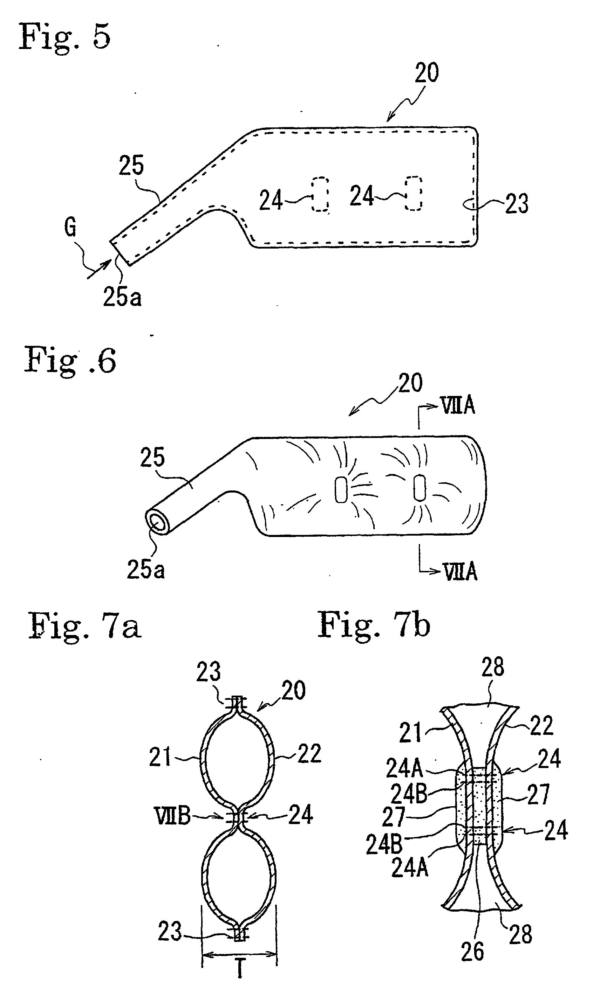

Figs. 5 through 7b show an airbag for protecting the head of an occupant which is disposed along a roof-side member above an automobile door. This airbag 20 has two panels 21, 22 which are connected to each other by silicone adhesive 26 and sewing yarns 23, 24. The airbag 20 comprises a gas introducing portion 25 to be disposed along an Apillar or a C pillar of the automobile. Gas from a gas generator is introduced into the airbag 20 through an opening 25a at a tip of the gas introducing portion 25. The sewing yarn 23 is stitched to connect the peripheral portions of the panels 21, 22 and the sewing yarn 24 is stitched to connect the middle portions of the panels 21, 22. The airbag 20 expands from the roof side to an upper portion of the door so as to receive the head of the occupant. The airbag 20 is sewn together at the middle portions of the panels 21, 22 in order to restrain the thickness (T in Fig. 7a) of the inflated airbag 20 to a predetermined value.

The form of sewing the panels 21, 22 along the peripheral portions of the panels 21, 22 is the same as that shown in Fig. 1b, that is, the peripheral portions of the panels 21, 22 are bonded with the silicone adhesive and sewn up along two stitching lines by sewing yarns, but the illustration is omitted. One of the sewing yarns composing the inner stitching line is thinner than the other one of the sewing yarns composing the outer stitching line.

At the middle portions of the panels 21, 22, as shown in Fig. 7b, the panes 21, 22 are bonded with the silicone adhesive 26 and sewn up by the sewing yarn 24 to each other. The sewing yarn 24 comprises a thin yarn 24A and a thick yarn 24B. The yarn 24A is positioned close to an inner chamber 28 of the airbag 20 as compared to the yarn 24B. Therefore, during the inflation of the airbag 20, the thin yarn 24A is broken in the same manner as the case of Fig. 2, thereby partially absorbing the energy applied to the connection of the panels 21, 22 in the stripping direction. As a result of this, the impact in the stripping direction applied to the seam made by the sewing yarn 24B is reduced.

Though the two sewing yarns 24A, 24B having different thickness are used in the embodiment of Figs. 5-7, only one stitching line may be provided.

As mentioned above, the present invention provides an airbag which can securely prevent the gas leakage from the connection between the panels and has excellent productivity.

## Claims

1. An airbag comprising a first panel (1) and a second panel (2) peripheral portions of which are connected to each other by connecting means,
wherein said connecting means includes sewing by yarn (6A,6B) and **characterised in that** said connecting means further includes bonding by silicone adhesive (5), the silicone adhesive being applied to the peripheral portions of the panels to form a seam of silicone adhesive between the panels, said seam of silicone adhesive (5) being stretchable between said first panel (1) and said second panel (2) thereby preventing gas leakage between said panels (1,2), wherein said silicone adhesive (5) is stretchable by 200% or more; and
wherein the seam of silicone adhesive (5) to be applied is from 0.01g/cm² to 0.05g/cm².

2. The airbag as claimed in claim 1, wherein said sewing by yarn comprises a first seam positioned outside and a second seam positioned inside, and wherein the sewing yarn for the second seam (6A) is thinner than the sewing yarn for the first seam (6B).

3. The airbag as claimed in claim 2, wherein the sewing yarn for the second seam (6A) is broken during the inflation of the airbag so as to partially absorb energy of gas pressure.

4. The airbag as claimed in claim 1 or 2, wherein the seam on the peripheral portions of the panels (1,2) is covered by sealant (7).

5. The airbag as claimed in any one of claims 1 through 4, wherein the silicone adhesive (5) is room temperature vulcanising silicone rubber.

6. The airbag as claimed in any one of claims 1 through 5, wherein the panels (1,2) are made of synthetic resin woven fabrics.

7. The airbag as claimed in claim 6, wherein the inner surfaces of the panels (1,2) are coated with silicone resin or rubber.

## Patentansprüche

1. Airbag, der eine erste Bahn (1) und eine zweite Bahn (2) umfasst, wobei Umfangsabschnitte derselben durch Verbindungsmittel miteinander verbunden sind,
wobei die Verbindungsmittel Vernähen mit Garn (6A, 6B) einschließen und **dadurch gekennzeichnet, dass** die Verbindungsmittel des Weiteren Verkleben mit Silikonklebstoff (5) einschließen, wobei der Silikonklebstoff auf die Umfangsabschnitte der Bahnen aufgetragen wird, um eine Naht aus Silikonklebstoff zwischen den Bahnen herzustellen, und die Naht aus Silikonklebstoff (5) zwischen der ersten Bahn (1) und der zweiten Bahn (2) gedehnt werden kann, um so das Austreten von Gas zwischen den Bahnen (1, 2) zu verhindern, wobei der Silikonklebstoff (5) um 200% oder mehr gedehnt werden kann; und
wobei die Naht aus Silikonklebstoff (5), die aufzutragen ist, zwischen 0,01 g/cm² und 0,05 g/cm² wiegt.

2. Airbag nach Anspruch 1, wobei das Vernähen mit Garn ein erste Naht, die außerhalb angeordnet ist, und eine zweite Naht, die innerhalb angeordnet ist, umfasst, und wobei das Vernähgarn für die zweite Naht (6A) dünner ist als das Vernähgarn für die erste Naht (6B).

3. Airbag nach Anspruch 2, wobei das Vernähgam für die zweite Naht (6A) beim Aufblasen des Airbags reißt, um so teilweise Energie des Gasdrucks zu absorbieren.

4. Airbag nach Anspruch 1 oder 2, wobei die Naht an den Umfangsabschnitten der Bahnen (1, 2) mit Dichtungsmittel (7) abgedeckt ist.

5. Airbag nach einem der Ansprüche 1 bis 4, wobei der Silikonklebstoff (5) bei Zimmertemperatur vulkanisierender Silikonkautschuk ist.

6. Airbag nach einem der Ansprüche 1 bis 5, wobei die Bahnen (1, 2) aus Kunstharzgeweben bestehen.

7. Airbag nach Anspruch 6, wobei die Innenflächen der Bahnen (1, 2) mit Silikonharz oder -kautschuk überzogen sind.

## Revendications

1. Coussin gonflable de sécurité comportant un premier panneau (1) et un second panneau (2) dont des parties périphériques sont reliées entre elles par des moyens d'assemblage,
dans lequel lesdits moyens d'assemblage comprennent une couture à l'aide d'un fil (6A, 6B) et **caractérisé en ce que** lesdits moyens d'assemblage comprennent en outre un collage au moyen d'un adhésif (5) aux silicones, l'adhésif aux silicones étant appliqué aux parties périphériques des panneaux pour former un joint d'adhésif aux silicones entre les panneaux, ledit joint d'adhésif (5) aux silicones pouvant être étiré entre ledit premier panneau (1) et ledit second panneau (2) afin d'empêcher le gaz de fuir entre lesdits panneaux (1, 2), ledit adhésif (5) aux silicones étant étirable à 200% ou plus ; et
dans lequel le joint d'adhésif (5) aux silicones devant être appliqué est de 0,01 g/cm² à 0,05 g/cm².

2. Coussin gonflable de sécurité selon la revendication 1, dans lequel ladite couture au moyen d'un fil comprend une première couture positionnée à l'extérieur et une seconde couture positionnée à l'intérieur, et dans lequel le fil à coudre pour la seconde couture (6A) est plus mince que le fil à coudre pour la première couture (6B).

3. Coussin gonflable de sécurité selon la revendication 2, dans lequel le fil à coudre pour la seconde couture (6A) est rompu lors du gonflage du coussin gonflable de sécurité afin d'absorber partiellement l'énergie de la pression du gaz.

4. Coussin gonflable de sécurité selon la revendication 1 ou 2, dans lequel le joint situé sur les parties périphériques des panneaux (1, 2) est recouvert d'un agent d'étanchéité (7).

5. Coussin gonflable de sécurité selon l'une quelconques des revendications 1 à 4, dans lequel l'adhésif (5) aux silicones est du caoutchouc de silicone vulcanisant à la température ambiante.

6. Coussin gonflable de sécurité selon l'une quelconques des revendications 1 à 5, dans lequel les panneaux (1, 2) sont formés d'étoffes tissées en résine synthétique.

7. Coussin gonflable de sécurité selon la revendication 6, dans lequel les surfaces intérieures des panneaux (1, 2) sont revêtues d'une résine ou d'un caoutchouc de silicone.
